# EUROPÄISCHE PATENTSCHRIFT

(11) **EP 3 653 325 B1**
(45) Veröffentlichungstag und Bekanntmachung des Hinweises auf die Patenterteilung: **24.02.2021**
(21) Anmeldenummer: 19208747.6
(22) Anmeldetag: 13.11.2019
(51) Int. Cl.: B23F 5/16, B23F 7/00

(54) **VERFAHREN ZUM SPANENDEN ERZEUGEN EINES MIT EINER DOPPELSCHRÄG-VERZAHNUNG VERSEHENEN ZAHNRADS**
METHOD FOR MACHINING A TOOTH WHEEL PROVIDED WITH A DOUBLE SLANTING COG
PROCÉDÉ DE PRODUCTION PAR ENLÈVEMENT DE MATIÈRE D'UNE ROUE DENTÉE PRÉSENTANT UNE DENTURE À DOUBLE INCLINAISON

(30) Priorität: 14.11.2018 DE 102018128556
(43) Veröffentlichungstag der Anmeldung: 20.05.2020
(73) Patentinhaber: Präwema Antriebstechnik GmbH, 37269 Eschwege/Werra (DE)
(72) Erfinder: Schieke, Jörg, 99092 Erfurt-Marbach (DE); Holderbein, Walter, 37269 Eschwege (DE)
(74) Vertreter: Cohausz & Florack

(56) Entgegenhaltungen:
- WO-A2-2012/010165
- CA-A- 971 650
- CN-A- 107 649 847
- GB-A- 544 323
- GB-A- 191 423 785
- US-A- 2 873 652

## Beschreibung

Die Erfindung betrifft ein Verfahren zum spanenden Erzeugen eines Zahnrads, das mit einer Doppelschräg-Verzahnung versehen ist, bei der die Zähne der einen Verzahnungshälfte gegenläufig zu den Zähnen der anderen Verzahnungshälfte ansteigend ausgebildet sind, wobei die Verzahnungshälften bezogen auf die Drehachse des Zahnrads um einen Winkelbetrag versetzt zueinander angeordnet sind.

Auf diese Weise überlappen sich bei einer Projektion in einer normal zur Drehachse des Zahnrads ausgerichteten Ebene bei einem erfindungsgemäß zu bearbeitenden Zahnrad die Zähne der einen Verzahnungshälfte die zu ihnen benachbarten Zahnlücken, die zwischen den Zähnen der jeweils anderen Verzahnungshälfte vorhanden sind.

Die an einem erfindungsgemäßen Zahnrad vorhandene Doppelschrägverzahnung wird in der Fachwelt wegen der spitz aufeinander zulaufenden Dachflächen ihrer Zähne auch als "Pfeilverzahnung" bezeichnet. Hierbei wird zwischen "echten" Pfeilverzahnungen unterschieden, bei denen sich die spitz aufeinander zulaufenden Zähne der Verzahnung V-förmig treffen, und solchen Verzahnungen, bei denen zwischen den einander zugeordneten Enden der Zähne der Verzahnungshälften ein gewisser Abstand vorhanden ist. Ein mit einer solchen Verzahnung versehenes Zahnrad ist beispielsweise in der Veröffentlichung GB 191423785 einer britischen Patentanmeldung beschrieben, die auch ein Verfahren gemäß dem Oberbegriff des unabhängigen Anspruchs 1 offenbart.

Die dort beschriebene Möglichkeit der Herstellung solcher Zahnräder durch Fräsen hat sich inzwischen bei der Erzeugung von in einem Stück erzeugten, pfeilverzahnten Zahnrädern als Standard etabliert.

Eine besondere Herausforderung bei der spanabhebenden Herstellung von Zahnrädern mit echter Pfeilverzahnung ergibt sich daraus, dass für das spanende Werkzeug in dem Bereich, in dem die gegenläufig ansteigend ausgerichteten Zähne der Verzahnungshälften aufeinandertreffen, in der Regel zu wenig Raum zur Verfügung steht, um den jeweiligen Zahn bis zum Punkt des Zusammentreffens der Zähne, dem so genannten "Apex-Punkt", zu bearbeiten.

In der Praxis wird diesem Problem dadurch begegnet, dass in das Zahnrad eine zwischen den Verzahnungshälften umlaufende Nut eingeformt wird, so dass zwischen den Verzahnungshälften ein freier Abstand vorhanden ist, dessen Breite zur Aufnahme des bei der Zahnbearbeitung über das der Nut zugeordnete Ende des Zahns hinaus bewegten Werkzeugs ausreicht. Allerdings muss hierfür eine der Breite der Nut entsprechende Verbreiterung des Zahnrads hingenommen werden.

Schon aus der GB 191423785 geht hierzu hervor, dass diese unvermeidbare Verbreiterung dadurch vermindert werden kann, dass für eine vereinfachte Herstellung der Zähne einer Doppelschräg-Verzahnung durch Fräsen die Verzahnungshälften nicht nur in einem gewissen axialen Abstand angeordnet, sondern auch um einen gewissen Winkelbetrag in Bezug auf die Drehachse des Zahnrads gegeneinander so versetzt sein können, dass die der einen Verzahnungshälfte zugeordneten Enden der Zähne der ersten Verzahnungshälfte jeweils mittig in Bezug auf eine zu ihnen benachbarte Zahnlücke der zweiten Verzahnungshälfte angeordnet sind. Auf diese Weise kann das gemäß der GB 191423785 eingesetzte Fräswerkzeug bei der Bearbeitung des Zahns der ersten Verzahnungshälfte entlang von dessen erster Zahnflanke bis in den Freiraum bewegt werden, der durch den Endbereich der zugeordneten Zahnlücke der zweiten Verzahnungshälfte gebildet ist. Anschließend wird der Fräser weiterhin unter Nutzung dieses Freiraums entlang der Stirnseite des bearbeiteten Zahns geführt, die der betreffenden Zahnlücke zugeordnet ist, um daraufhin die andere Zahnflanke des jeweils bearbeiteten Zahns zu fräsen.

Vor dem Hintergrund des voranstehend erläuterten Standes der Technik hat sich die Aufgabe gestellt, ein Verfahren zur Herstellung von Zahnrädern zu nennen, mit dem sich besonders wirtschaftlich Zahnräder der voranstehend erläuterten Art herstellen lassen.

Die Erfindung hat diese Aufgabe dadurch gelöst, dass bei der Herstellung eines doppeltschrägverzahnten Zahnrads die in Anspruch 1 angegebenen Verfahrensschritte absolviert werden. Dabei versteht es sich von selbst, dass in der Praxis neben diesen erfindungsgemäß vorgegebenen Arbeitsschritten sämtliche sonstigen bei der Herstellung von Zahnrädern der hier in Rede stehenden Art absolvierten Arbeitsschritte durchgeführt werden, wenn sich hierzu die Notwendigkeit ergibt.

Die Erfindung sieht somit zur Herstellung eines Zahnrads, das mit einer Doppelschräg-Verzahnung versehenen ist, bei der die Zähne der einen Verzahnungshälfte gegenläufig zu den Zähnen der anderen Verzahnungshälfte ansteigend ausgebildet sind, wobei die Verzahnungshälften bezogen auf die Drehachse des Zahnrads um einen Winkelbetrag versetzt zueinander angeordnet sind, vor, dass ein Zahnradrohling bereitgestellt wird, an dem die an dem Zahnrad vorgesehenen Zähne durch Wälzschälen mittels eines Wälzschälrades erzeugt werden, das bei der Wälzschälbearbeitung jeweils der Zähne einer der Verzahnungshälften bis in die jeweils benachbarten Zahnlücken der anderen Verzahnungshälfte reicht.

Bei dem erfindungsgemäß zur Herstellung eines mit einer Doppelverzahnung versehenen Zahnrads eingesetzten Wälzschälen handelt es sich um ein kontinuierliches spanabhebendes Verfahren, bei dem Wälzfräsen und Stoßen durch kontinuierliches Abwälzen mit axialem Vorschub vereint sind. Hieraus ergibt sich eine besondere Wirtschaftlichkeit des Wälzschälens, die es ermöglicht, Zahnräder in deutlich verkürzter Bearbeitungszeit herzustellen. Charakteristisch für das Wälzschälen ist dabei die schräge Anordnung der Achsen von Werkzeug und Werkstück, aufgrund derer sich die Drehachsen von Werkzeug und Werkstück unter einem so genannten Achskreuzwinkel schneiden. Durch die gekreuzte Achsanordnung entsteht eine Relativgeschwindigkeit zwischen Werkzeug und Werkstück. Diese Relativbewegung wird als Schnittbewegung ausgenutzt, deren Hauptschnittrichtung entlang der Zahnlücke des Werkstücks ausgerichtet ist. Die Größe der Schnittgeschwindigkeit ist von der Größe des Achskreuzwinkels und von der Drehzahl der Bearbeitungsspindeln abhängig (s. Broschüre "Wälzschälen - Power Skiving", Ausgabe 08/2014, herausgegeben von der Anmelderin und unter der URL "http://praewema.dvs-gruppe.com/uploads/tx_xpctypedownloadssimple/PRW_Power_Skiving.pdf" zum Download bereitgestellt).

Überraschend hat sich nun gezeigt, dass sich durch einen Versatz seiner Verzahnungshälften auch bei einem doppelschrägverzahnten Zahnrad im Bereich der einander zugeordneten Enden der Zähne der Verzahnungshälften im Bereich der dem jeweils bearbeiteten Zahn gegenüber liegenden Zahnlücke so viel Raum zur Verfügung stellen lässt, dass ein zur Wälzschälbearbeitung eingesetztes Wälzschälwerkzeug sich bis in diesen Raum bewegen kann und so die betreffenden Zähne der einen Verzahnungshälfte vollständig bearbeiten kann, ohne mit einem der Zähne der jeweils anderen Verzahnungshälfte zu kollidieren.

Dabei erweist es sich als besonders vorteilhaft, dass der erfindungsgemäß genutzte Versatz der Verzahnungshälften eines doppeltschrägverzahnten Zahnrads nicht nur die Anwendung des Wälzschälens bei minimierter Breite des zu bearbeitenden Werkstücks ermöglicht, sondern auch einen vergrößerten Achskreuzwinkel, wodurch die erfindungsgemäß durchgeführte Wälzschälbearbeitung besonders effektiv wird.

Besonders wirkungsvoll lässt sich das erfindungsgemäße Verfahren bei der Fertigung von Zahnrädern einsetzen, bei denen die auszubildende Doppelschräg-Verzahnung eine Außenverzahnung ist. Genauso ist es aber auch möglich, in erfindungsgemäßer Weise eine Doppel-Innenverzahnung zu erzeugen.

Wichtig für die Erfindung ist, dass der erfindungsgemäß bereitgestellte Rohling das Material, in das beim Wälzschälen geschnitten wird, bereitstellt. Hierzu kann der Rohling in an sich bekannter Weise aus einem Stück beispielsweise schmiede- oder gießtechnisch vorgeformt sein.

Alternativ zu der einstückigen Ausbildung des Rohlings ist es auch möglich, den Rohling aus zwei oder mehr vorgefertigten Bauteilen zusammenzusetzen. Wesentlich ist dabei jedoch, dass die vorgefertigten Bauteile noch nicht mit der fertigen Verzahnung versehen sind, sondern diese erst durch die erfindungsgemäße Bearbeitung des Zahnradrohlings erzeugt wird, der in diesem Fall aus den betreffenden Bauteilen zusammengesetzt ist.

Abhängig von der Geometrie der am erfindungsgemäß herzustellenden Zahnrad zu erzeugenden Doppelverzahnung kann es auch für den erfindungsgemäßen Einsatz des Wälzschälens erforderlich sein, dass zusätzlich zu dem im Bereich der jeweiligen Zahnlücke genutzten Freiraum zwischen den einander zugeordneten Stirnseiten der Zähne der Verzahnungshälften des Zahnrads ein gewisser Abstand vorhanden ist, der für die Bewegung des Wälzschälwerkzeugs zur Verfügung steht. Dieser Abstand ist jedoch deutlich geringer als der, der erforderlich wäre, wenn durch Wälzschälen Doppelverzahnungen erzeugt werden sollen, deren Verzahnungshälften nicht versetzt zueinander angeordnet sind, bei denen die Doppelverzahnung also als Pfeilverzahnung mit einer zwischen den Verzahnungshälften liegenden umlaufenden Nut ausgebildet ist. Der auch für das erfindungsgemäße Verfahren optional zwischen den Verzahnungshälften vorhandene Abstand kann dabei auf einfache Weise dadurch erzeugt werden, dass vor der Wälzschälbearbeitung zwischen den Verzahnungshälften eine um das Zahnrad umlaufende Nut eingeformt wird.

Die Größe des erfindungsgemäß im Bereich der Zahnlücken der einen Verzahnungshälfte bei der Bearbeitung der Zähne der jeweils anderen Verzahnungshälfte genutzte Freiraum kann durch eine geeignete Einstellung des Winkelversatzes zwischen den Verzahnungshälften optimiert werden. Hierzu hat sich ein Winkelbetrag, um den die Verzahnungshälften versetzt zueinander angeordnet sind, als besonders günstig erwiesen, der der halben Teilung der Verzahnung der Verzahnungshälften entspricht.

Nachfolgend wird die Erfindung anhand einer ein Ausführungsbeispiel darstellenden Zeichnung näher erläutert. Es zeigen jeweils schematisch:

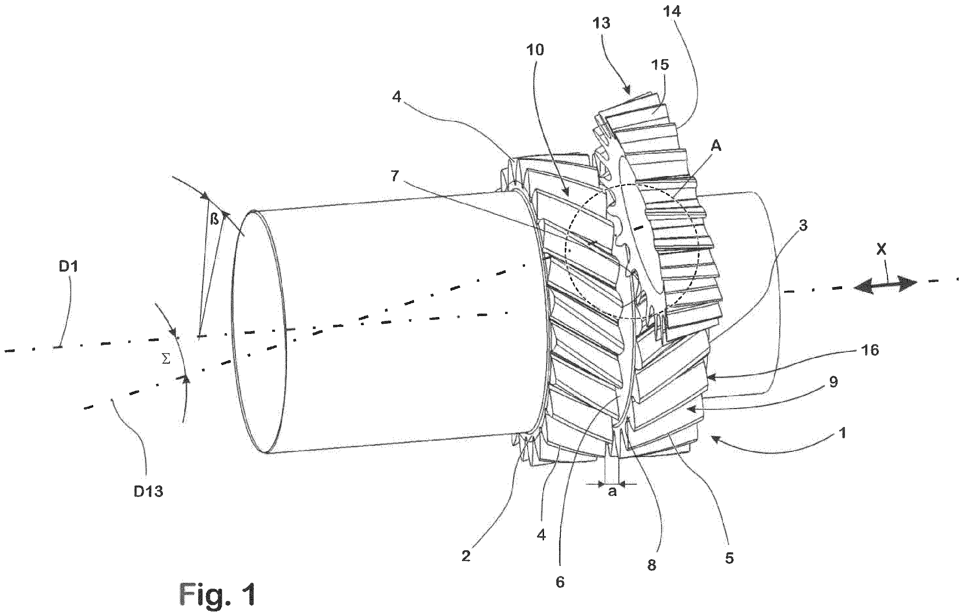

- Fig. 1: ein Zahnrad mit Doppelverzahnung bei der Wälzschälbearbeitung durch ein Wälzschälrad in einer perspektivischen Ansicht;

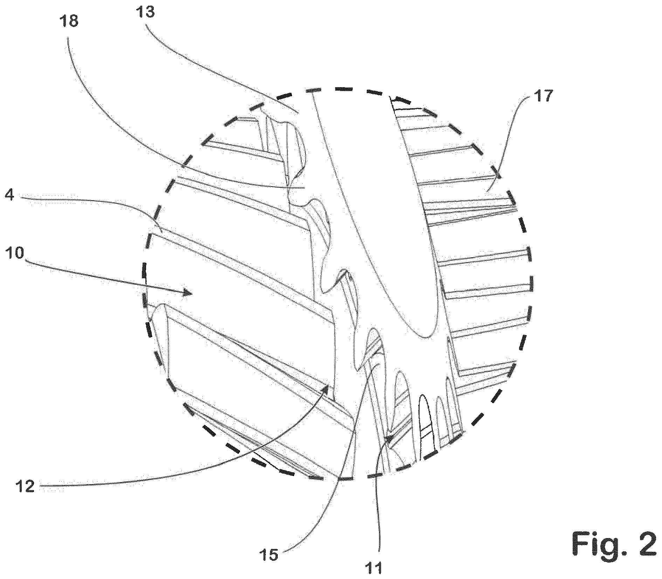

- Fig. 2: einen vergrößerten Ausschnitt A von Fig. 1.

Das in üblicher Weise vorbearbeitete Zahnrad 1 weist eine als Außenverzahnung ausgebildete Doppelverzahnung mit einer linken Verzahnungshälfte 2 und einer rechten Verzahnungshälfte 3 auf.

Die Verzahnungshälften 2,3 weisen jeweils in für Doppelverzahnungen typischer Weise geformte Zähne 4,5 auf, die gegenläufig ansteigend so zueinander ausgerichtet sind, dass sie, in Seitenansicht des Zahnrads 1 betrachtet, nach Art eines "A" spitz aufeinander zulaufen.

Dabei ist zwischen den Verzahnungshälften 2,3 des aus einem Stück geformten Zahnrads 1 eine umlaufende Nut 6 eingeformt, so dass die an den einander zugeordneten Enden 7,8 der Zähne 4,5 der Verzahnungshälften 2,3 vorhandenen Stirnseiten der Zähne 4,5 in einem axialen Abstand a angeordnet sind.

Gleichzeitig ist die linke Verzahnungshälfte 2 bezogen auf die Drehachse D1 um einen Winkelbetrag β versetzt gegenüber der rechten Verzahnungshälfte 3 ausgerichtet, der der halben Teilung der Verzahnung der Verzahnungshälften 2,3 entspricht.

Auf diese Weise überlappen sich bei einer Projektion in einer normal zur Drehachse D1 des Zahnrads 1 ausgerichteten Ebene bei dem zu bearbeitenden Zahnrad 1 die Zähne 4 der linken Verzahnungshälfte 2 die zu ihnen benachbarten Zahnlücken 9, von denen jeweils eine zwischen zwei benachbarten Zähnen 5 der rechten Verzahnungshälfte 3 vorhanden ist.

Somit ist jedem Zahn 4 der linken Verzahnungshälfte 2 eine der jeweils zwischen zwei Zähnen 5 der rechten Verzahnungshälfte 3 vorhandenen Zahnlücken 9 zugeordnet. Genauso ist in entsprechender Weise jedem Zahn 5 der rechten Verzahnungshälfte 3 eine der jeweils von zwei Zähnen 4 der linken Verzahnungshälfte 2 begrenzten Zahnlücken 10 zugeordnet, so dass jedem Ende 7,8 der Zähne 4,5 der Verzahnungshälften 2,3 ein Endbereich 11,12 der Zahnlücken 9,10 der jeweils anderen Verzahnungshälfte 3,2 gegenüberliegt.

Beim hier gezeigten Beispiel der Fertigbearbeitung der Zähne 5 der rechten Verzahnungshälfte 3 kommt als Werkzeug ein konventionell ausgebildetes Wälzschälrad 13 zum Einsatz, an dessen Umfang die an der Verzahnungshälfte 3 abzubildende Verzahnung 14 mit Zähnen 15 ausgeprägt ist. Während der Wälzschälbearbeitung dreht sich das Wälzschälrad 13 kontinuierlich um eine Drehachse D13, die in Bezug auf die Drehachse D1 des während der Wälzschälbearbeitung als Werkstück ebenfalls kontinuierlich drehangetriebenen Zahnrads 1 so schräg angeordnet ist, dass sich die Drehachsen D13,D1 unter einem Achskreuzwinkel ∑ kreuzen. Gleichzeit werden Wälzschälrad 13 und Zahnrad 1 in Achsrichtung X parallel zur Drehachse D1 relativ zueinander bewegt.

So wird das Zahnrad 1 mit seiner jeweils durch das Wälzschälen spanabhebend bearbeiteten Zahnflanke 17 ausgehend von der von der linken Verzahnungshälfte 2 abgewandten Stirnseite 16 der jeweils bearbeitenden Zähne 5 der rechten Verzahnungshälfte 3 entlang des Wälzschälrads 13 bewegt.

Diese Bewegung wird fortgesetzt, bis mindestens einer der jeweils in Eingriff mit den bearbeiteten Zähnen 5 befindliche Zähne 15 des Wälzschälrads 13 mit seiner der linken Verzahnungshälfte 2 zugeordneten Stirnseite 18 über den durch die Nut 6 gebildeten Abstand a hinaus bis in den an die Nut 6 angrenzenden Endbereich 12 der den bearbeiteten Zähnen 5 zugeordneten Zahnlücken 10 der linken Verzahnungshälfte 2 eingelaufen ist.

Auf diese Weise können die Zahnflanken 17 der Zähne 5 der rechten Verzahnungshälfte 3 fertig bearbeitet werden, ohne dass es zur Kollision der Zähne 15 des Wälzschälrades 13 mit den Zähnen 4 der linken Verzahnungshälfte kommt, obwohl der durch die Nut 6 gebildete Abstand a der einander zugeordneten Enden 7,8 der Zähne 4,5 der Verzahnungshälften 2,3 kleiner ist als der Abstand, der unter Berücksichtigung der schrägen Ausrichtung der Drehachsen D1,D13 erforderlich ist, um Zähne 5 der rechten Verzahnungshälfte 3 über die gesamte in Richtung der Drehachse D1 gemessenen Länge ihrer Zahnflanken 17 mit den Zähnen 15 des Wälzschälrades 13 zu bearbeiten.

In entsprechender Weise werden dann die Zahnflanken der Zähne 4 der linken Verzahnungshälfte 2 unter Ausnutzung des in den Endbereichen 11 der Zahnlücken 9 der rechten Verzahnungshälfte 3 mit Hilfe eines für diese Bearbeitungsaufgabe angepassten Wälzschälrades fertig bearbeitet. Alternativ ist es auch möglich, nach entsprechender Ausrichtung das Wälzschälrad 13 für diesen Zweck zu nutzen.

### BEZUGSZEICHEN

- 1: Zahnrad (Werkstück)
- 2: linke Verzahnungshälfte des Zahnrads 1
- 3: rechte Verzahnungshälfte des Zahnrads 1
- 4: Zähne der linken Verzahnungshälfte 2
- 5: Zähne der rechten Verzahnungshälfte 3
- 6: umlaufende Nut
- 7: Ende der Zähne 4 der Verzahnungshälfte 2
- 8: Ende der Zähne 5 der Verzahnungshälfte 3
- 9: Zahnlücken der Verzahnungshälfte 3
- 10: Zahnlücken der Verzahnungshälfte 2
- 11: Endbereich der Zahnlücken 9
- 12: Endbereich der Zahnlücken 10
- 13: Wälzschälrad (Werkzeug)
- 14: Verzahnung des Wälzschälrads 13
- 15: Zähne der Verzahnung 14
- 16: von der linken Verzahnungshälfte abgewandte Stirnseite des jeweils zu bearbeitenden Zahns 5 der rechten Verzahnungshälfte 3
- 17: Zahnflanke des jeweils bearbeiteten Zahns 5
- 18: Stirnseite der Zähne 15 des Wälzschälrads 13

- a: axialer Abstand der einander zugeordneten Stirnseite der Zähne 4,5
- β: Winkelbetrag (Winkelversatz)
- D1: Drehachse D1 des Zahnrads 1
- D13: Drehachse des Wälzschälrads 13
- ∑: Achskreuzwinkel
- X: Achsrichtung parallel zur Drehachse D1

## Patentansprüche

1. Verfahren zum spanenden Erzeugen eines Zahnrads (1), das mit einer Doppelschräg-Verzahnung versehenen ist, bei der die Zähne (4) der einen Verzahnungshälfte (2) gegenläufig zu den Zähnen (5) der anderen Verzahnungshälfte (3) ansteigend ausgebildet sind, wobei die Verzahnungshälften (2,3) bezogen auf die Drehachse (D1) des Zahnrads (1) um einen Winkelbetrag (β) versetzt zueinander angeordnet sind, **dadurch gekennzeichnet, dass** ein Zahnradrohling bereitgestellt wird, an dem die an dem Zahnrad (1) vorgesehenen Zähne (4,5) durch Wälzschälen mittels eines Wälzschälrades (13) erzeugt werden, das bei der Wälzschälbearbeitung jeweils der Zähne (4,5) einer der Verzahnungshälften (2,3) bis in die jeweils benachbarten Zahnlücken (9,10) der anderen Verzahnungshälfte (3,2) reicht.

2. Verfahren nach Anspruch **1,dadurch gekennzeichnet, dass** die an dem Zahnrad (1) auszubildende Doppelschräg-Verzahnung eine Außenverzahnung ist.

3. Verfahren nach Anspruch **1,dadurch gekennzeichnet, dass** die an dem Zahnrad (1) auszubildende Doppelschräg-Verzahnung eine Innenverzahnung ist.

4. Verfahren nach einem der voranstehenden Ansprüche, **dadurch gekennzeichnet, dass** vor der Wälzschälbearbeitung zwischen den Verzahnungshälften (2,3) eine um das Zahnrad (1) umlaufende Nut (6) eingeformt wird.

5. Verfahren nach einem der voranstehenden Ansprüche, **dadurch gekennzeichnet, dass** der Winkelbetrag (β), um den die Verzahnungshälften (2,3) versetzt zueinander angeordnet sind, der halben Teilung der Verzahnung der Verzahnungshälften (2,3) entspricht.

## Claims

1. Method for producing a gear wheel (1) by machining, which is provided with a double helical gearing in which the gears (4) of one gearing half (2) are designed so as to ascend counter to the gears (5) of the other gearing half (3), wherein the gearing halves (2, 3) are arranged offset to one another in relation to the axis of rotation (D1) of the gear wheel (1) by an angle value (β), **characterised in that** a gear wheel blank is provided on which the gears (4, 5) provided on the gear wheel (1) are produced by gear skiving by means of gear skiving wheel (13), which, in the case of gear skiving processing of each of the gears (4, 5) of one of the gearing halves (2, 3), reaches the respectively adjacent gear spaces (9, 10) of the other gearing half (3, 2).

2. Method according to claim 1, **characterised in that** the double helical gearing to be designed on the gear wheel (1) is an outer gearing.

3. Method according to claim 1, **characterised in that** the double helical gearing to be designed on the gear wheel (1) is an inner gearing.

4. Method according to any one of the preceding claims, **characterised in that** prior to gear skiving processing, a groove (6) circulating around the gear wheel (1) is formed between the gearing halves (2, 3).

5. Method according to any one of the preceding claims, **characterised in that** the angle value (β), by which the gearing halves (2, 3) are arranged offset to one another, corresponds to half the division of the gearing of the gearing halves (2, 3).

## Revendications

1. Procédé d'usinage d'une roue dentée (1) pourvue d'une denture à double hélice, où les dents (4) d'une moitié de denture (2) sont conçues montantes en sens inverse des dents (5) de l'autre moitié de denture (3), les moitiés de denture (2, 3) étant disposées décalées l'une par rapport à l'autre d'une valeur angulaire (β) par rapport à l'axe de rotation (D1) de la roue dentée (1),
**caractérisé en ce qu'**une ébauche de roue dentée est mise à disposition, sur laquelle les dents (4, 5) prévues sur la roue dentée (1) sont produites par décolletage en développante au moyen d'une roue de décolletage (13) qui, pendant l'opération de décolletage, atteint à chaque fois les dents (4, 5) de l'une des moitiés de denture (2, 3) jusque dans les entredents (9, 10) respectivement voisins de l'autre moitié de denture (3, 2).

2. Procédé selon la revendication 1, **caractérisé en ce que** la denture à double hélice à former sur la roue dentée (1) est une denture externe.

3. Procédé selon la revendication 1, **caractérisé en ce que** la denture à double hélice à former sur la roue dentée (1) est une denture interne.

4. Procédé selon l'une des revendications précédentes, **caractérisé en ce qu'**une rainure (6) périphérique est formée autour de la roue dentée (1), entre les moitiés de denture (2, 3), avant l'opération de décolletage.

5. Procédé selon l'une des revendications précédentes, **caractérisé en ce que** la valeur angulaire (β), de laquelle les moitiés de denture (2, 3) sont disposées de manière décalée l'une par rapport à l'autre, correspond à la moitié du pas de denture des moitiés de denture (2, 3).
